(19) **Europäisches Patentamt European Patent Office Office européen des brevets**

(11) **EP 3 724 591 B1**

(12) **FASCICULE DE BREVET EUROPEEN**

(45) Date de publication et mention
de la délivrance du brevet:
**15.12.2021 Bulletin 2021/50**

(21) Numéro de dépôt: **18836837.7**

(22) Date de dépôt: **13.12.2018**

(51) Int Cl.:
*F28G 15/00* *(2006.01)* *F22B 37/00* *(2006.01)*

(86) Numéro de dépôt international:
**PCT/FR2018/053247**

(87) Numéro de publication internationale:
**WO 2019/115948 (20.06.2019 Gazette 2019/25)**

(54) **PROCEDE D'EVALUATION DU COLMATAGE D'UN ECHANGEUR THERMIQUE**

VERFAHREN ZUR BEURTEILUNG DER VERSCHMUTZUNG EINES WÄRMETAUSCHERS

METHOD FOR EVALUATING FOULING OF A HEAT EXCHANGER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **13.12.2017 FR 1762085**

(43) Date de publication de la demande:
**21.10.2020 Bulletin 2020/43**

(73) Titulaire: **Electricité de France
75008 Paris (FR)**

(72) Inventeurs:
• **VASSEUR, Julien
80090 Amiens (FR)**
• **SCHWARTZ, Aurélien
25220 Thise (FR)**
• **PINEAU, David
44120 Vertou (FR)**

(74) Mandataire: **Regimbeau
20, rue de Chazelles
75847 Paris Cedex 17 (FR)**

(56) Documents cités:
**EP-A2- 3 087 444    FR-A1- 2 993 090
FR-A1- 3 044 157**

**Description**

DOMAINE TECHNIQUE ET CONTEXTE DE L'INVENTION

La présente invention se rapporte d'une façon générale au domaine de l'inspection des tubes d'un échangeur de chaleur à tubes. Plus précisément, l'invention concerne un procédé d'évaluation du colmatage de passages d'une plaque entretoise d'un échangeur thermique à tubes, lesdits passages étant ménagés le long des tubes et servant à la d'un fluide dans ledit échangeur thermique à travers ladite plaque. EP 3 087 444, qui est considéré comme l'état de la technique le plus pertinent, divulgue un procédé d'évaluation du colmatage de passages d'une plaque entretoise d'un échangeur thermique à tubes, lesdits passages étant ménagés le long des tubes pour la traversée de la plaque entretoise par un fluide.

Un générateur de vapeur est généralement composé d'un faisceau de tubes dans lesquels circule le fluide chaud, et autour desquels circule le fluide à chauffer. Par exemple, dans le cas d'un générateur de vapeur d'une centrale nucléaire de type REP, les générateurs de vapeur sont des échangeurs de chaleur qui utilisent l'énergie du circuit primaire issue de la réaction nucléaire pour transformer l'eau du circuit secondaire en vapeur qui alimentera la turbine et ainsi à produire de l'électricité.

Le générateur de vapeur amène le fluide secondaire d'un état d'eau liquide à l'état de vapeur juste en limite de saturation, en utilisant la chaleur de l'eau primaire. Celle-ci circule dans des tubes autour desquels circule l'eau secondaire. La sortie du générateur de vapeur est le point le plus haut en température et pression du circuit secondaire.

La surface d'échange, séparant physiquement les deux circuits, est ainsi constituée d'un faisceau tubulaire, composé de 3500 à 5600 tubes, selon le modèle, dans lesquels circule l'eau primaire portée à haute température (320°C) et haute pression (155bars).

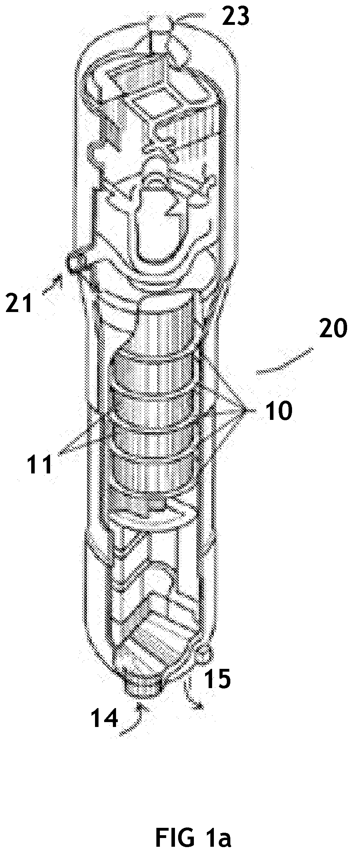

Les **figures 1a-1b** représentent un exemple de générateur de vapeur respectivement en perspective déchirée et en coupe. Il est divisé en deux parties : un corps de chauffe 20 (appelé « riser » en anglais) exclusivement au sein duquel circule l'eau du circuit primaire (d'une entrée 14 vers une sortie 15), et une zone de vapeur 25 (appelée dôme) remplie de vapeur d'eau générée. L'eau liquide du circuit secondaire entre par une entrée 21 au sommet de la zone de chauffe 20.

Ainsi configuré, l'échange thermique entre le circuit primaire et le circuit secondaire se fait au sein de la zone de chauffe 20 à travers une pluralité de tubes 11 en « U inversé ». Lesdits tubes 11 sont maintenus en place par des plaques entretoises 10 immobilisées par des tirants fixés en partie basse du générateur de vapeur.

Les modèles de générateurs de vapeur comptent généralement huit ou neuf plaques entretoises 10, la hauteur globale de tels générateurs est de l'ordre d'une vingtaine de mètres.

L'eau du circuit secondaire suit d'abord un chemin descendant dans un espace annulaire 22 extérieur (appelé « downcomer » en anglais) définie par l'espace laissé entre l'enveloppe extérieure du générateur de vapeur et une enveloppe intérieure siège des échanges thermiques comprenant le faisceau de tubes 11.

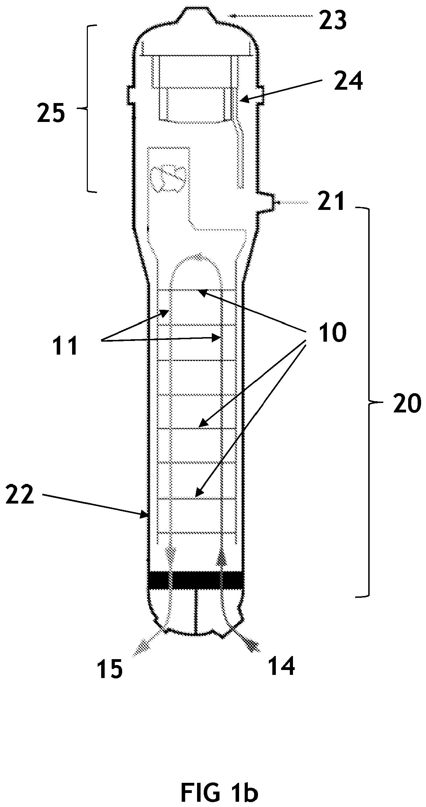

On appelle jambe chaude, la moitié de la zone de chauffe 20 constituée des branches des tubes dans lesquels l'eau est ascendante (partie droite sur la figure 1b), et jambe froide l'autre moitié constituée des branches des tubes dans lesquels l'eau est descendante et plus froide que celle de la jambe chaude (partie gauche de la figure 1b). L'eau du circuit secondaire circulant dans la zone de chauffe 20 voit son titre vapeur augmenter au fur et à mesure de son ascendance.

La force motrice qui assure cette circulation ascendante de l'eau dans la zone de chauffe 20 résulte de la différence des masses volumiques entre la colonne d'eau descendante dans l'espace annulaire et celle ascendante à l'état diphasique dans la zone de chauffe 20. C'est un fonctionnement naturel en thermosiphon.

L'eau refroidie du circuit primaire quitte le générateur de vapeur par la sortie 15. La vapeur d'eau générée s'échappe par la sortie 23 du circuit secondaire au sommet de la zone de vapeur 25. Au sein de cette zone, une eau non évaporée est récupérée par un dispositif de récupération dits cadres sécheurs 24 et retombe dans le downcomer 22.

Pour revenir sur les tubes 11 du générateur de vapeur, ceux-ci sont comme expliqués maintenus par les plaques entretoises 10 disposées généralement perpendiculairement aux tubes qui les traversent.

Afin de laisser passer le fluide ascendant qui se vaporise, les passages de ces plaques entretoises 10 sont foliés, c'est-à-dire que leur forme présente des lobes autour des tubes. Comme l'eau passe de l'état liquide à l'état vapeur, elle dépose toutes les matières qu'elle contenait (typiquement des oxydes). Si les dépôts de matière se font dans les lobes, ils diminuent le passage libre : c'est le colmatage, qui est donc l'obturation progressive, par des dépôts, des trous destinés au passage du mélange eau/vapeur.

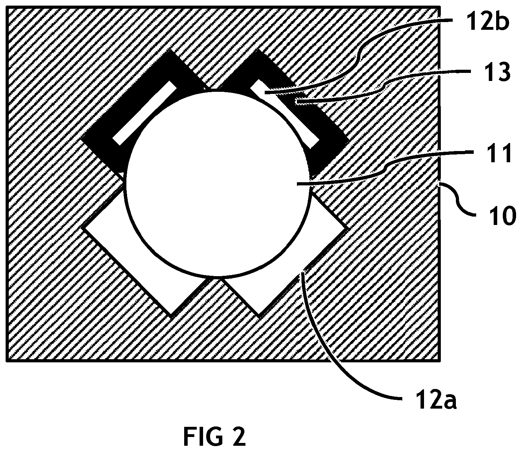

La **figure 2** illustre schématiquement une vue de dessus d'un passage folié dans une plaque entretoise 10, dans lequel passe un tube 11. Les lobes 12a et 12b permettent à l'eau de traverser la plaque entretoise 10 le long du tube 11, permettant ainsi la circulation de l'eau dans le générateur de vapeur. Un dépôt 13 est visible au niveau du lobe 12b, colmatant ledit lobe 12b. Le dépôt peut se situer du côté du tube et/ou du côté de la plaque.

Le colmatage conduit à des modifications de l'écoulement de l'eau dans le générateur de vapeur, et ainsi favorise l'apparition de vibrations excessives des tubes, ainsi qu'induire des efforts mécaniques importants sur les structures internes des générateur de vapeur. Plus précisément, quatre risques causés par le colmatage ont été identifiés :

- Une perturbation du champ de vitesse peut engendrer des instabilités vibratoires mettant en danger l'intégrité des tubes 11 ;
- Lors d'un transitoire de puissance très rapide, des oscillations de pression et de température peuvent apparaitre et se répercuter sur le cœur du réacteur nucléaire ;
- Une augmentation localisée du chargement des plaques entretoises 10 peut rompre les tirants qui les maintiennent en place ;
- Une diminution du taux de recirculation, et donc de la masse d'eau dans le générateur de vapeur peut compromettre sa capacité à extraire la chaleur résiduelle après une perte d'alimentation en eau.

Cette dégradation a donc des effets à la fois sur la sûreté et sur les performances des installations. Il est donc indispensable de bien connaître la nature et l'évolution de cette dégradation.

Afin de supprimer ces dépôts notamment d'oxydes créant des colmatages, il est bien connu de nettoyer les plaques entretoises par des procédés de nettoyage chimiques. Ces procédés consistent à injecter des réactifs chimiques dans le circuit secondaire des générateurs de vapeur afin de déstructurer et dissoudre ces dépôts.

Toutefois, la quantité de réactifs à injecter dépend de la quantité présente d'oxydes dans les générateurs de vapeur et conditionne la quantité d'effluents à traiter résultants de la campagne de nettoyage. Ces effluents sont une source complémentaire d'inconvénients que subit l'exploitant en raison de limitations imposées par les autorités. L'évaluation de la quantité des dépôts d'oxydes dans les générateurs de vapeur permet alors de déterminer de manière optimale la périodicité de telles campagnes de nettoyage.

Par conséquent, il est préalablement nécessaire de suivre de manière aussi fiable que possible la présence et l'évolution des dépôts qui colmatent les passages foliés. Cependant le défi principal du diagnostic du colmatage tient à la difficulté d'accès de l'intérieur des générateurs de vapeur et à l'absence de capteurs internes.

C'est pour cela que l'estimation de colmatage se fait lors des arrêts de tranche pour entretien, soit de façon télévisuelle (avec un robot muni d'une caméra), soit via une sonde axiale à courant de Foucault. C'est actuellement, le seul système d'examen non destructif qui soit capable d'accéder à la totalité des intersections tubes/plaques entretoises des générateurs de vapeur.

Les courants de Foucault apparaissent dans un matériau conducteur lorsque l'on fait varier le flux magnétique à proximité. On fait ainsi circuler dans un tube dudit échangeur une sonde à courant de Foucault multifréquence et on mesure avec celle-ci un signal de mesure fonction de l'environnement dans lequel la sonde se trouve, duquel on peut extraire des informations quant à des anomalies dans l'échangeur thermique.

Une variation de l'induction magnétique, typiquement par une bobine dans laquelle circule un courant alternatif, engendre des courants de Foucault, dont la variation induite du champ magnétique est détectée. Typiquement, on mesure la différence de tension engendrée par la variation d'impédance de la bobine.

L'exploitation des signaux de mesure de cette sonde à courant de Foucault n'induit pas d'allongement de l'arrêt du générateur de vapeur, puisque cette sonde à courant de Foucault est déjà utilisée lors des arrêts de tranche, notamment pour inspecter l'intégrité des tubes du générateur de vapeur. Cette sonde à courant de Foucault, initialement destinée à la détection d'endommagement des tubes, est également sensible au colmatage.

Cependant, ces méthodes ont l'inconvénient d'être intrusives, nécessitant une mobilisation de ressources matérielles et humaines pour leur réalisation. En effet, l'interprétation du signal de la sonde est actuellement réalisée manuellement par des opérateurs spécialisés, ce qui est très long, de l'ordre d'une semaine de traitement environ pour l'analyse d'un seul générateur de vapeur. De plus, l'intervention d'un opérateur pour relever des mesures à partir d'un logiciel d'analyse donne souvent lieu à un biais difficile à quantifier.

En outre, le signal de mesure n'est pas calibré et est bruité, de sorte que son exploitation peut se révéler difficile.

L'évaluation de l'aspect colmaté d'un passage folié par un opérateur à partir du signal de mesure est en outre très peu fiable, étant généralement effectuée empiriquement au vu du signal reçu et de sa comparaison avec d'autres signaux correspondant à d'autres passages dont l'état est connu, par exemple par inspection télévisuelle.

Partant de ce constat, il a été proposé une méthode dite « NGL dynamique » (voir en particulier le document « Diagnostic du colmatage des générateurs de vapeur à l'aide de modèles physiques et statistiques », S. Girard, Thèse de l'Ecole Nationale Supérieure des Mines de Paris, Décembre 2012.) utilisant des capteurs destinés à la mesure de niveaux d'eau dans le générateur de vapeur.

Le terme de niveau d'eau ne s'applique au sens propre que dans le « réservoir », c'est-à-dire l'espace d'arrivée de l'eau du circuit secondaire, en haut du downcomer 22. En effet, la vapeur dans le riser 20 n'est pas séparée de l'eau liquide par une surface libre : le fluide qui y circule est un mélange dont le titre augmente progressivement.

Le niveau dans le réservoir est suivi et régulé par le système de contrôlecommande. Un niveau trop bas ferait courir le risque d'un début de vaporisation dans le cœur car l'extraction de chaleur par le générateur de vapeur serait insuffisante. À l'inverse, un niveau excessif entraînerait une humidité importante de la vapeur pouvant être dommageable aux turbines.

Le niveau est estimé à partir de l'écart de pression entre deux piquages situés à des cotes différentes. La mesure est donc affectée, entre autres, par les variations de masse volumique du fluide. Elle est par ailleurs sensible aux pertes de charges parasites et à l'hétérogénéité de l'écoulement dans le downcomer 22.

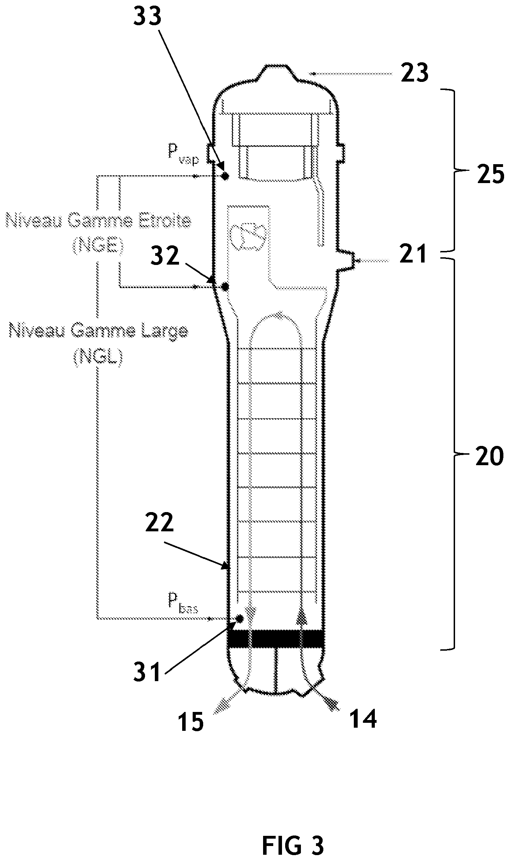

En référence à la **figure 3**, des capteurs 31, 32, 33 sont installés à trois hauteurs du générateur de vapeur. Le premier capteur 31 mesure la pression dans le circuit secondaire au bas du générateur de vapeur, i.e. dans le downcomer 22 au « virage » avant la remontée. Le deuxième capteur 32 mesure la pression dans le circuit secondaire au bas du réservoir (sommet du riser 20), i.e. environ au niveau de l'entrée d'eau. Le troisième capteur 33 mesure la pression dans le circuit secondaire au sommet du dôme 25 (sommet du générateur de vapeur, vers le point de sortie 23 de la vapeur).

Le « niveau gamme étroite » (NGE) est utilisé pour contrôler le débit d'eau issue du circuit secondaire. Il est déduit de la différence de pression entre le deuxième et le troisième capteurs 32, 33. Hormis lors de transitoires très rapides pouvant perturber la mesure, par exemple en cas de dépressurisation accidentelle, le niveau gamme étroite est maintenu constant.

Le « niveau gamme large » (NGL) est quant à lui déduit de la différence de pression entre le premier et le troisième capteurs 31, 33. Il est par conséquent beaucoup plus sensible à la température et au débit de l'eau du circuit secondaire, ainsi qu'au taux de recirculation. Il n'est utilisé pour suivre le niveau que lors de régimes lentement variables, notamment comme aide à la conduite manuelle aux basses charges. Lors de transitoires plus rapides, la mesure de NGL n'est plus représentative du niveau car elle est trop affectée par la pression dynamique. C'est cet effet qui permet le diagnostic du colmatage.

En régime stationnaire de puissance, les débits sont constants. La présence d'un colmatage accroit la résistance de passage de l'eau dans le riser 20 car réduit la section de passage de l'eau, diminuant le débit de vapeur et conséquemment le débit dans la boucle de recirculation donc des pertes de charges dans le downcomer 22 augmentant la valeur de mesure NGL. Cette mesure donne une indication de tendance d'une présence de colmatage, et non une valeur absolue.

Le document cité ci-avant a montré que pour apprécier la quantité de présence du colmatage, il était avantageux de procéder à des transitoires de puissance, c'est-dire en régime dynamique, car l'altération de la thermohydraulique du générateur de vapeur était encore plus contrastée selon qu'il y ait ou pas une présence de colmatage.

Le principe est alors de simuler la réponse du NGL en dynamique, à partir d'un modèle, lors d'un transitoire de puissance pour différents états de colmatage et de comparer les réponses des courbes obtenues avec les mesures enregistrées par les capteurs lors de transitoires réels réalisés selon des profils de baisse de puissance assez semblables.

De tels transitoires ont l'avantage de se produire par exemple au moment des essais de calibration des grappes de contrôle de la puissance du réacteur, essais au cours desquels il est procédé à la pesée du pouvoir neutrophage des dites grappes, c'est-à-dire du pouvoir d'absorption des neutrons à l'origine des réactions fissions nucléaires dans le cœur du réacteur.

Cette pesée est réalisée selon un protocole d'essai standardisé où les grappes sont insérées progressivement dans le cœur du réacteur de sorte à faire baisser la puissance selon un profil préalablement fixé, typiquement une baisse de 50 % pendant une dizaine de minutes. Ces essais ont l'avantage supplémentaire d'être assez rapprochés dans le temps.

Grâce à l'utilisation de modèles physiques et statistiques il a pu être montré ce qui, dans la forme des courbes de réponse des mesures NGL réalisée sur une période de 10 ans dans un générateur de vapeur, était révélateur de l'état de son colmatage.

Une autre approche est celle de choisir préalablement des profils de réponse NGL pour différentes configurations de colmatage jugées d'intérêt selon un modèle et de comparer les profils, c'est la méthode de diagnostic à profil choisi.

Les résultats obtenus par la méthode « NGL Dynamique » qui semblaient prometteurs à partir de quelques essais sur des paliers 900 MW, ont trouvé leur limite d'applicabilité sur les paliers de niveau de puissance supérieure, 1300 MW, 1400 MW, et.

L'inconvénient majeur de la méthode « NGL dynamique » concerne sa sensibilité aux variations importantes du niveau d'eau dans le downcomer 22 confronté aux transitoires de baisse ou d'augmentation de puissance rapide. Ces variations importantes sont attribuées à la difficulté de la régulation à corriger efficacement les variations du niveau d'eau du générateur de vapeur dans ces transitoires.

En raison de ces limites l'application de cette méthode du « NGL dynamique » ne permet pas un suivi pertinent du colmatage.

Au vu des problématiques critiques en particulier pour la sécurité, il serait souhaitable de disposer d'un nouveau procédé d'évaluation du colmatage de passages d'une plaque entretoise d'un échangeur thermique à tubes qui soit plus performant, plus fiable et plus générique.

PRESENTATION DE L'INVENTION

Selon un premier aspect de l'invention, est proposé un procédé d'évaluation du colmatage de passages d'une plaque entretoise d'un échangeur thermique à tubes, lesdits passages étant ménagés le long des tubes pour la traversée de la plaque entretoise par un fluide, dans lequel

- un premier capteur de pression est disposé à une altitude basse de l'échangeur thermique ;
- un deuxième capteur de pression est disposé à une altitude moyenne de l'échangeur thermique ;
- un troisième capteur de pression est disposé à une altitude haute de l'échangeur thermique ;

Le procédé comprenant la mise en œuvre par une unité de traitement de données d'étapes de :

(a) pendant une phase de fonctionnement transitoire de l'échangeur thermique, détermination d'une valeur en fonction du temps de Niveau de Gamme Large, NGL, à partir des mesures des premier et troisième capteurs de pression, et d'une valeur en fonction du temps de Niveau de Gamme Etroite, NGE, à partir des mesures des deuxième et troisième capteurs de pression ;

(b) détermination d'une valeur en fonction du temps d'écart de Niveau de Gamme Vapeur, $\Delta$NGV, l'écart de Niveau de Gamme Vapeur correspondant au Niveau de Gamme Large dont on a filtré une composante représentative d'une variation de surface libre d'eau dans l'échangeur thermique, à partir des valeurs de NGL et NGE ;

(c) comparaison de la valeur de $\Delta$NGV déterminée avec un ensemble de profils de référence $\Delta$NGV$_i$ pour ladite phase de fonctionnement transitoire de l'échangeur thermique, chaque profil de référence $\Delta$NGV$_i$ étant associé à un niveau de colmatage, de sorte à identifier un profil de référence cible $\Delta$NGV$_{opt}$ parmi les profils de référence $\Delta$NGV$_i$ pour ladite phase de fonctionnement transitoire de l'échangeur thermique, qui est celui le plus proche de la valeur $\Delta$NGV déterminée.

(d) restitué sur une interface du niveau de colmatage associé au profil de référence cible $\Delta$NGV$_{opt}$ identifié

Ce procédé est avantageusement complété par les caractéristiques suivantes, prises seules ou en une quelconque de leur combinaison techniquement possible :

- l'échangeur thermique est un générateur de vapeur présentant une zone de chauffe et une zone de vapeur située à une altitude supérieure à la zone de chauffe, les tubes s'étendant seulement dans la zone de chauffe ;
- le premier capteur de pression est disposé sensiblement au bas de la zone de chauffe, le deuxième capteur est disposé sensiblement en haut de la zone de chauffe, et le troisième échangeur est disposé sensiblement en haut de la zone de vapeur;
- la valeur en fonction du temps de $\Delta$NGV est déterminée à partir des valeurs de NGL et NGE par la formule $\Delta$NGV=NGL-NGE ;
- le niveau de colmatage est un taux de colmatage exprimé entre 0 et 1 ;
- le procédé comprend une étape préalable (a0) de génération dudit ensemble de profils de référence $\Delta$NGVi pendant ladite phase de fonctionnement transitoire de l'échangeur thermique ;
- l'étape (a0) comprend la mise en œuvre des étapes (a) et (b) pour un échangeur thermique de référence similaire audit échangeur thermique pendant au moins deux occurrences de ladite phase de fonctionnement transitoire respectivement associées à un premier niveau de colmatage connu et un deuxième niveau de colmatage connu supérieur au premier niveau de colmatage, de sorte à obtenir un premier profil de référence $\Delta$**NGV**$_{Niveau_{faible}}$ pendant ladite phase de fonctionnement transitoire de l'échangeur thermique pour le premier niveau de colmatage et un deuxième profil de référence $\Delta$**NGV**$_{Niveau_{fort}}$ pendant ladite phase de fonctionnement transitoire de l'échangeur thermique pour le premier niveau de colmatage, les autres profils de référence $\Delta$NGVi pendant ladite phase de fonctionnement transitoire de l'échangeur thermique étant calculés à partir des premier et deuxième profils $\Delta$**NGV**$_{Niveau_{faible}}$ et $\Delta$**NGV**$_{Niveau_{faible}}$.
- les autres profils de référence $\Delta$NGVi sont calculés à partir des premier et deuxième profils de référence $\Delta$**NGV**$_{Taux_{faible}}$ = $\Delta$**NGV**$_{Niveau_{faible}}$ et $\Delta$**NGV**$_{Taux_{fort}}$ = $\Delta$**NGV**$_{Niveau_{fort}}$ en utilisant la formule

$$\Delta\mathbf{NGV_i} = \frac{(Taux_{fort}-Taux_i).\Delta\text{NGV}_{Taux_{faible}}+(Taux_i-Taux_{faible}).\Delta\text{NGV}_{Taux_{fort}}}{(Taux_{fort}-Taux_{faible})}.$$

- pour chaque niveau de colmatage considéré, l'étape (a0) comprend la mise en œuvre des étapes (a) et (b) pour ledit échangeur thermique de référence similaire audit échangeur thermique pendant au moins trois occurrences de ladite phase de fonctionnement transitoire associées audit niveau de colmatage, de sorte à obtenir au moins trois profils réels ΔNGVr pendant ladite phase de fonctionnement transitoire de l'échangeur thermique pour ledit niveau de colmatage, l'obtention du profil de référence ΔNGVi pendant ladite phase de fonctionnement transitoire de l'échangeur thermique pour ledit niveau de colmatage comprenant le calcul d'une moyenne des profils réels ΔNGVr puis d'une approximation de ladite moyenne par une fonction donnée.

Selon un deuxième aspect est proposé un équipement comprenant une unité de traitement de données connectée à un premier capteur de pression, un deuxième capteur de pression et un troisième capteur de pression, configuré pour la mise en œuvre du procédé selon le premier aspect de l'invention.

Selon un troisième aspect est proposé un ensemble d'un équipement selon le deuxième aspect et d'un échangeur thermique à tubes, dans lequel

- le premier capteur de pression est disposé à une altitude basse de l'échangeur thermique ;
- le deuxième capteur de pression est disposé à une altitude moyenne de l'échangeur thermique ;
- le troisième capteur de pression est disposé à une altitude haute de l'échangeur thermique.

L'invention concerne également un produit programme d'ordinateur comprenant des instructions de code de programme pour l'exécution des étapes du procédé selon le premier aspect de l'invention, lorsque ledit programme est exécuté sur un ordinateur.

## PRESENTATION DES FIGURES

D'autres caractéristiques, buts et avantages de l'invention ressortiront de la description qui suit, qui est purement illustrative et non limitative, et qui doit être lue en regard des dessins annexés parmi lesquels :

- les figures 1a-1b, déjà commentées, illustrent schématiquement selon deux vues un échangeur thermique de type générateur de vapeur ;
- la figure 2, déjà commentée, illustre schématiquement, en vue de dessus, un passage folié dans une plaque entretoise, dans lequel passe un tube, selon une configuration courante d'un générateur de vapeur ;
- la figure 3 déjà commentée, illustre schématiquement, l'instrumentation du générateur de vapeur des figures 1a-1b ;
- la figure 4 illustre une architecture pour la mise en œuvre du présent procédé,
- la figure 5 est un schéma de principe du procédé d'évaluation du colmatage,
- les figures 6a et 6b illustrent des exemples respectivement de signal ΔNGV et NGL ;
- les figures 7a à 7c illustrent l'allure des signaux utilisés pour obtenir un ensemble de profils de référence ΔNGV$_i$.

## DESCRIPTION DETAILLEE

*Architecture*

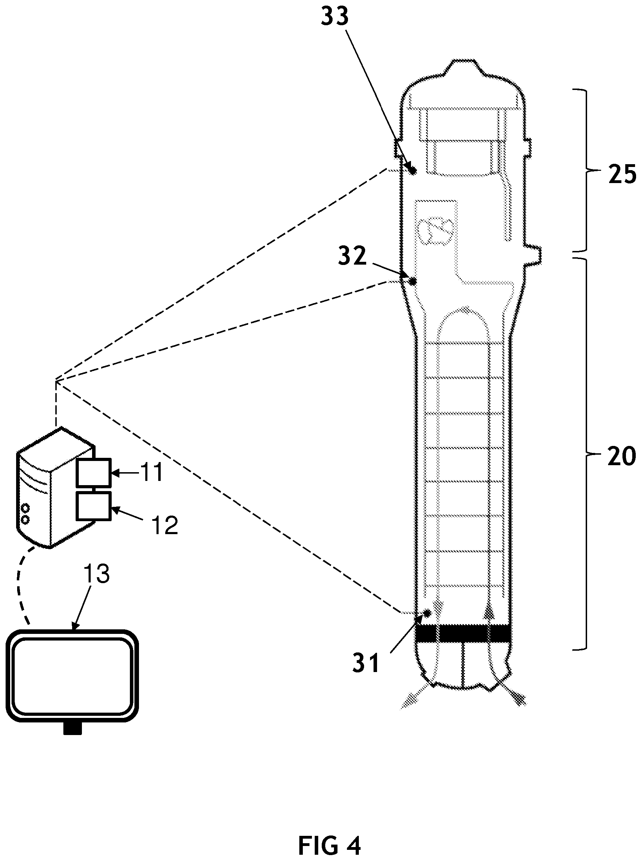

En référence à la figure 4, est proposé un procédé d'évaluation du colmatage de passages de plaques entretoises 10 d'un échangeur thermique à tubes 11, lesdits passages 12a, 12b étant ménagés le long des tubes 11 pour la traversée de la plaque entretoise 10 par un fluide.

L'échangeur thermique a tubes est préférentiellement un générateur de vapeur du type décrit dans l'introduction.

Ce procédé est un perfectionnement des techniques de NGL dynamique et utilise des mesures de pression issues des premier, deuxième et troisième capteurs de pression 31, 32, 33.

De façon générale :

- Le premier capteur 31 est à une altitude basse de l'échangeur thermique ;
- Le deuxième capteur 32 est à une altitude moyenne de l'échangeur thermique ;
- Le troisième capteur 33 est à une altitude haute de l'échangeur thermique.

En considérant un générateur de vapeur présentant une zone de chauffe 20 dans laquelle s'étend les tubes 11 et une zone de vapeur 25 au-dessus de la zone de chauffe, alors préférentiellement (« haut » et « bas » s'entendent en termes d'altitude) :

- Le premier capteur 31 est disposé sensiblement au bas de la zone de chauffe 20 (partie basse du downcomer 22) ;
- Le deuxième capteur 32 est disposé sensiblement en haut de la zone de chauffe 20 (i.e. sensiblement en bas de la zone de vapeur 20) ;

- Le troisième échangeur 33 est disposé sensiblement en haut de la zone de vapeur 25.

Le présent procédé est mis en œuvre par une unité de traitement 1 (par exemple un ou plusieurs processeurs) d'un équipement, par exemple un serveur, en connexion avec les capteurs de pression 31, 32, 33 de sorte à disposer des mesures de pressions associées.

L'équipement peut comprendre une mémoire 2 (par exemple un disque dur) pour le stockage de données, et une interface 3 pour l'interaction avec un opérateur

*Delta NGV*

L'équation de la pression en bas du générateur de vapeur peut être exprimée comme suit :

$$P_{bas} = \rho_{\text{downcomer}} \cdot g \cdot z_{\text{surface}} + P_{\text{dôme}} - \text{pdc}$$

Pdc : perte de charge de référence dans le downcomer

$P_{bas}$ : pression mesurée au niveau du premier capteur 31

$P_{dome}$ : pression mesurée au niveau du troisième capteur 33

$\rho_{\text{downcomer}}$ : masse volumique de référence

$z_{\text{surface}}$ : désigne l'altitude de la surface de l'eau (i.e. le niveau d'eau) par rapport à l'altitude du premier capteur 31.

Comme expliqué, le colmatage accroit la résistance de passage de l'eau dans le riser 20 car réduit la section de passage de l'eau, diminuant le débit de vapeur et conséquemment le débit dans la boucle de recirculation donc des pertes de charges Pdc dans le downcomer 22 et baissant la valeur de $P_{dome}$.

Dans les variations de la puissance échangée du générateur de vapeur, les changements de phases à l'intérieur de la zone de chauffe 20 (liquéfaction dans un refroidissement ou évaporation dans une augmentation de puissance) génèrent des transitoires thermohydrauliques violents. Ces transitoires vont agir fortement sur la pression en bas de la zone de vapeur 25 (i.e. au niveau du deuxième capteur de pression 32), sensible au débit downcomer, ainsi qu'à la pression au sommet de la zone de vapeur 23 (i.e. au niveau du troisième capteur de pression 33) et sont en conséquence particulièrement adaptés à la qualification des pertes de charges internes du générateur de vapeur, directement liées au colmatage.

Toutefois, la mesure de pression en bas de la zone de chauffe 20 (i.e. au niveau du premier capteur de pression 31) est également représentative de l'altimétrie de la surface libre de l'eau dans le générateur. Cette hauteur d'eau n'est pas représentative du comportement du générateur de vapeur mais uniquement de la qualité de la régulation d'eau. En conséquence ses variations compliquent grandement l'interprétation du signal de pression basse du premier capteur de pression 31.

Le NGE est classiquement utilisé pour la régulation fine de la hauteur d'eau (sur une gamme de 1 m) dans le générateur de vapeur en fonctionnement, il pilote les vannes d'admission d'eau alimentaire du générateur de vapeur en fonctionnement nominal de l'installation. De façon connue pour l'homme du métier NGE est fonction de la différence entre les mesures de pression des deuxième et troisième capteurs 33.

Le NGL permet quant à lui de suivre (sur une gamme de plus de 15m) le niveau d'eau du générateur de vapeur au démarrage de la centrale, à l'arrêt ainsi que dans les situations anormales de fonctionnement (lorsque le deuxième capteur de pression 32 est dénoyé).

Le présent procédé utilise un nouvel indicateur appelé ΔNGV (delta NGV, « écart de niveau gamme vapeur ») qui utilise les sensibilités respectives du NGE (qui fournit un bon indicateur du niveau d'eau réel du générateur de vapeur) et du NGL (sensible aux variations de niveau, aux variations de débit et de température via la masse volumique de l'eau du downcomer) pour construire un indicateur ciblant spécifiquement les grandeurs impactées par le colmatage.

Le ΔNGV est basé sur le NGL dont on a filtré la composante due à la variation de la surface libre (incarnée par la mesure NGE), et il vient corriger le NGL, insuffisant jusque-là à la caractérisation efficace du colmatage. Cette variation n'est en effet en pratique pas corrélée au colmatage du générateur de vapeur mais seulement au comportement de la régulation ARE.

Cet indicateur est déterminé à partir des valeurs de NGL et NGE préférentiellement par la formule ΔNGV=NGL-NGE.

Les valeurs ΔNGV, NGL et NGE sont exprimées avantageusement en mCE (mètres de colonne d'eau), ou en une unité de pression (bar, pascal, etc.) ou en pourcentage par rapport à des niveaux maximum.

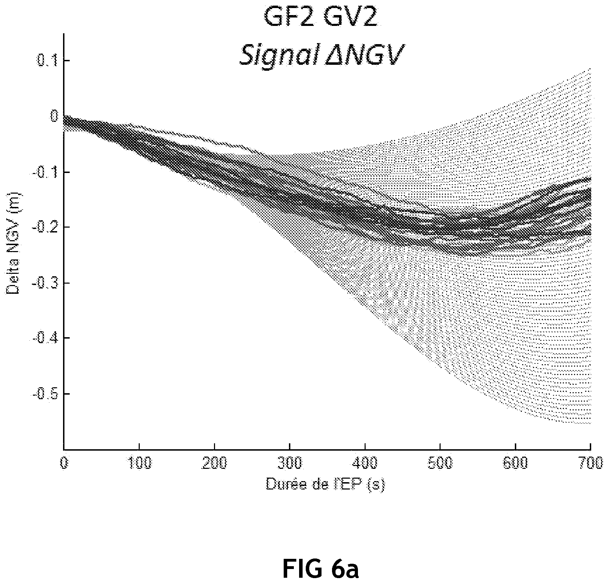

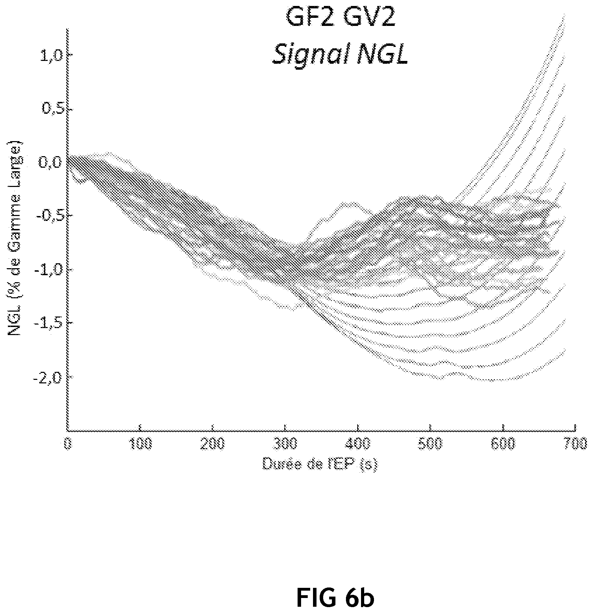

Comme on peut le voir sur les figures 6a et 6b, la « bosse » observable aux deux tiers du signal NGL, qui est symptomatique d'une variation du niveau réel dans le GV, est complètement filtrée sur le signal ΔNGV.

*Procédé*

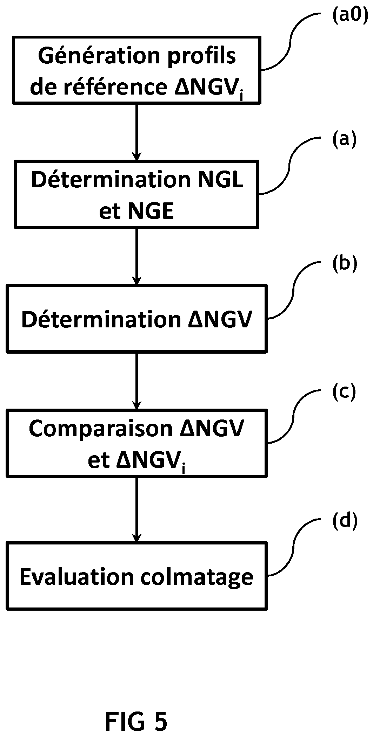

En référence à la **figure 5**, le procédé commence comme expliqué par une étape (a) de détermination par l'unité de traitement de données 1, pendant une phase de fonctionnement transitoire de l'échangeur thermique, d'une valeur en fonction du temps de Niveau de Gamme Large, NGL, à partir des mesures des premier et troisième capteurs de pression 31, 33, et d'une valeur en fonction du temps de Niveau de Gamme Etroite, NGE, à partir des mesures des deuxième et troisième capteurs de pression 31, 33.

De façon générale, par « phase de fonctionnement transitoire », on entend une phase dynamique pendant laquelle le niveau d'énergie thermique apporté à l'échangeur thermique fluctue. Une phase de fonctionnement transitoire peut être définie par une valeur de Puissance Electrique Active (PACT) associée de sorte à en appréhender la cinétique.

Ladite phase transitoire est en particulier celle ayant lieu pendant des essais périodiques standardisés réglementés tels que les « EP RGL 4 » sur les centrales nucléaires 900 MW (paliers CP1 et CP2) et 1300 MW, mais de nombreux autres essais périodiques de la famille EP RGL, EP RCP, EP RPN, etc.

Il est par ailleurs tout à fait envisageable d'appliquer cette méthode pendant des procédures d'ilotage, d'arrêt automatique du réacteur, de déclenchement turbine, etc. et même en fonctionnement normal pendant des transitoires de suivi de charge (prise ou baisse de puissance suivant la demande du gestionnaire du réseau électrique).

Comme nous le verrons plus loin, à la lecture du texte, la présente méthode utilise des profils de référence pour des phases de fonctionnement transitoires données (des « abaques ») et il suffit qu'ait lieu une phase de fonctionnement transitoire similaire à celle d'un profil de référence pour pouvoir appliquer la présente méthode.

L'homme du métier saura calculer les valeurs de NGE et NGL à partir des mesures de pression, ces indicateurs étant classiques.

La durée des phases de fonctionnement transitoire (en d'autres termes l'intervalle de temps sur lequel la valeur de NGL ou NGE est déterminée) est généralement de l'ordre de quelques dizaines à quelques milliers de secondes, préférentiellement quelques centaines de secondes.

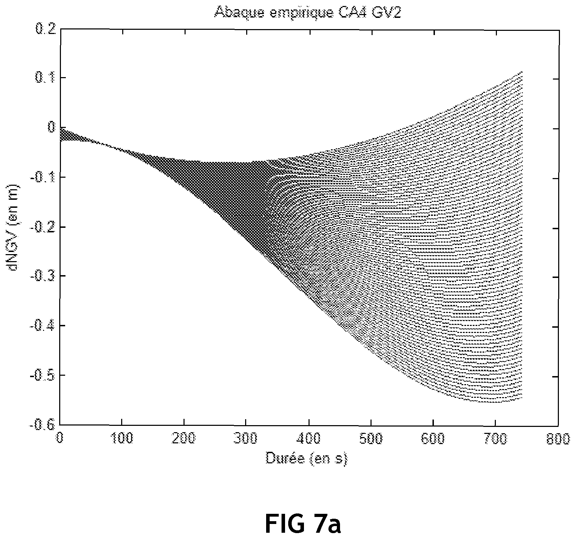

Dans les exemples des figures 6b et 7a-7c, la durée de la phase de fonctionnement transitoire est comprise dans un intervalle de temps entre 500 et 1500 secondes.

Dans une deuxième étape (b), l'unité de traitement de données 1 détermine la valeur en fonction du temps (sur la même durée de la phase de fonctionnement transitoire) d'écart de Niveau de Gamme Vapeur, ΔNGV, l'écart de Niveau de Gamme Vapeur correspondant au Niveau de Gamme Large dont on a filtré une composante représentative d'une variation de surface libre d'eau dans l'échangeur thermique, à partir des valeurs de NGL et NGE.

Comme expliqué, cette opération est préférentiellement la différence entre la valeur du NGL et la valeur du NGE (ΔNGV=NGL-NGE) puisque le NGE est représentatif de la variation de surface libre d'eau.

La valeur au cours du temps de NGL, NGE ou ΔNGV est également appelée respectivement « signal » NGL, NGE ou ΔNGV.

De façon préférée, on mettra en œuvre de façon classique un traitement statistique par centrage en zéro et par moyenne mobile des signaux de façon à les normaliser (aussi bien dans l'étape (a) que dans l'étape (b)).

Dans une étape (c), l'unité de traitement 1 compare la valeur de ΔNGV avec un ensemble de profils de référence ΔNGV$_i$ pour ladite phase de fonctionnement transitoire de l'échangeur thermique, chaque profil de référence ΔNGV$_i$ étant associé à un niveau de colmatage.

Plus précisément, on dispose d'une base de données de profils de référence ΔNGV$_i$ définis pour un type de phase de fonctionnement transitoire et un niveau de colmatage. Il est à noter qu'il peut même y avoir différentes bases de données de profils de référence ΔNGV$_i$ associées à plusieurs types d'échangeur thermiques. Les profils de référence ΔNGV$_i$ peuvent être stockés sur la mémoire 2.

Le niveau de colmatage doit être compris comme un paramètre représentatif de l'extension du colmatage, par exemple un taux entre 0 et 1 : un taux nul correspond à une absence complète de colmatage (passage 12a, 12b complètement ouvert) et un taux de 1 correspond à un colmatage complet (passage complètement bouché 12a, 12b).

L'ensemble des profils de référence ΔNGV$_i$ définis pour un type de phase de fonctionnement transitoire (i.e. pour toute la gamme de niveaux de colmatage) forme un « faisceau » de profils de référence tel que représenté dans l'exemple de la **figure 7a** (pour une phase de fonctionnement transitoire de type EP RGL 4), appelé abaque.

Plus le niveau de colmatage est faible, plus la valeur de ΔNGV remonte rapidement. En d'autres termes les profils en bas du faisceau correspondent à des niveaux de colmatage élevées, et les profils en haut de l'abaque correspondent à des niveaux de colmatage faible.

Les profils de référence ΔNGV$_i$ peuvent être déterminés empiriquement, en particulier par simulation numérique. Plus précisément, partant d'un modèle de l'échangeur thermique considéré, on vient précalculer les réponses ΔNGV attendues pour ladite phase de fonctionnement transitoire considérée pour chaque niveau de colmatage. A ce titre, le procédé comprend avantageusement une étape préalable (a0) de génération dudit ensemble de profils de référence

ΔNGV$_i$ pendant ladite phase de fonctionnement transitoire de l'échangeur thermique.

De façon préférée, l'élaboration d'un abaque empirique est réalisée à partir de la connaissance de deux signaux ΔNGV réels pour un échangeur thermique similaire à celui considéré (voire le même), pour lesquels on connaît les niveaux de colmatage respectifs.

En d'autres termes, l'étape (a0) comprend avantageusement la mise en œuvre des étapes (a) et (b) pour un échangeur thermique de référence similaire audit échangeur thermique pendant au moins deux occurrences de ladite phase de fonctionnement transitoire respectivement associées à un premier niveau de colmatage connu et un deuxième niveau de colmatage connu supérieur au premier niveau de colmatage, de sorte à obtenir un premier profil de référence ΔNGV$_{Niveau_{faible}}$ pendant ladite phase de fonctionnement transitoire de l'échangeur thermique pour le premier niveau de colmatage et un deuxième profil de référence ΔNGV$_{Niveau_{fort}}$ pendant ladite phase de fonctionnement transitoire de l'échangeur thermique pour le premier niveau de colmatage, les autres profils de référence ΔNGV$_i$ pendant ladite phase de fonctionnement transitoire de l'échangeur thermique étant calculés à partir des premier et deuxième profils ΔNGV$_{Niveau_{faible}}$ et ΔNGV$_{Niveau_{faible}}$.

En pratique, un abaque empirique s'appuie préférentiellement sur un faisceau ΔNGV réel d'une tranche de référence, ayant idéalement subi un nettoyage, et dont on dispose de mesures (par exemple par examen télévisuel) avant et après nettoyage qui vont respectivement définir le niveau fort et le niveau faible susmentionnés, afin d'être en capacité de couvrir une amplitude significative des niveaux de colmatage. Les niveaux de colmatage extrêmes et intermédiaires sont alors extrapolés linéairement à partir des courbes « supports » de l'abaque.

Pour chaque niveau de colmatage considéré, l'étape (a0) comprend la mise en œuvre des étapes (a) et (b) pour ledit échangeur thermique de référence similaire audit échangeur thermique pendant au moins trois occurrences de ladite phase de fonctionnement transitoire associées audit niveau de colmatage, de sorte à obtenir au moins trois profils réels ΔNGV$_r$ pendant ladite phase de fonctionnement transitoire de l'échangeur thermique pour ledit niveau de colmatage, l'obtention du profil de référence ΔNGV$_i$ pendant ladite phase de fonctionnement transitoire de l'échangeur thermique pour ledit niveau de colmatage comprenant le calcul d'une moyenne des profils réels ΔNGV$_r$ puis d'une approximation de ladite moyenne par une fonction donnée.

Ainsi, le signal ΔNGV représentatif des forts taux de colmatage (profil « bas » de l'abaque), est préférentiellement élaboré en moyennant les trois derniers signaux ΔNGVr réels (en particulier filtrés et normalisés) précédant le nettoyage, ou à la date du plus haut niveau de colmatage identifié sur la tranche, puis en approximant cette moyenne par un polynôme de degré 3.

De même, le signal ΔNGV représentatif des faibles niveaux de colmatage est préférentiellement élaboré en moyennant les trois premiers signaux ΔNGV réels suivant le nettoyage, ou à la date du plus bas niveau de colmatage identifié sur la tranche), puis en approximant cette moyenne par un polynôme de degré 3.

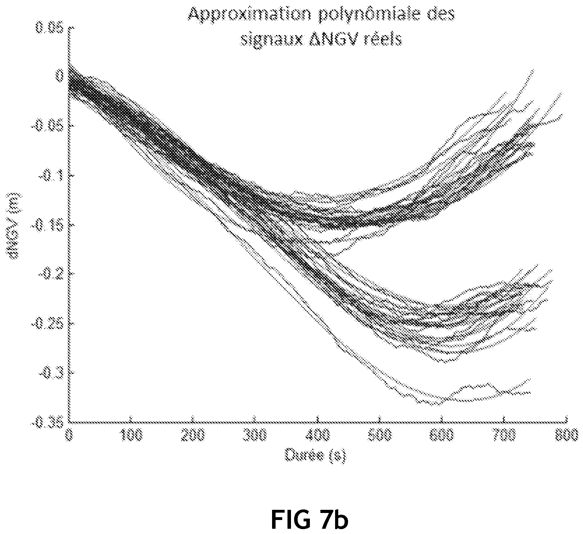

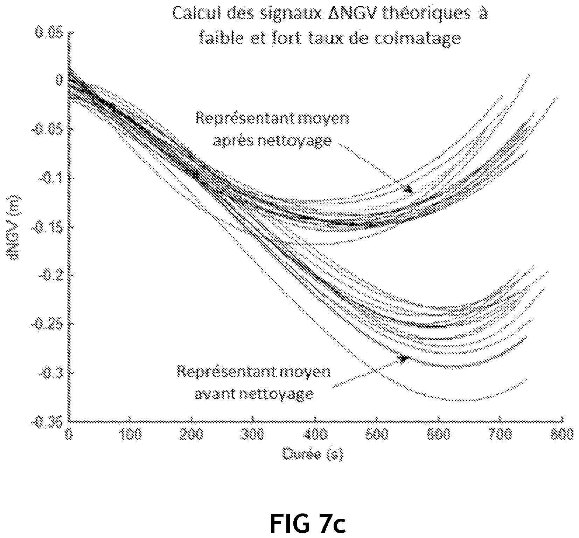

Ces opérations sont illustrées sur la figure 7b, qui représente l'approximation polynômiale de l'ensemble des signaux ΔNGV$_r$ réels d'un exemple de tranche CA4 GV2 (seuls les trois signaux avant et après colmatage sont en réalité nécessaires pour la suite). La figure 7c représente le calcul des signaux ΔNGV représentatifs des faibles et forts niveaux de colmatage, par moyenne respectivement des trois EP après et avant colmatage.

Une fois ces deux signaux ΔNGV théoriques élaborés, deux niveaux de colmatage doivent leur être associés, nommés ici Niveau$_{fort}$ et Niveau$_{faible}$ (Taux$_{fort}$ et Taux$_{faible}$ dans le mode de réalisation préféré où le niveau de colmatage désigne un taux de colmatage entre 0 et 1), à partir des mesures disponibles. Ensuite, l'abaque théorique complet est élaboré par interpolation.

Ainsi, le signal de référence ΔNGV$_i$ théorique pour un taux de colmatage Taux$_i$ peut être calculé de la manière suivante :

$$\Delta NGV_i = \frac{(Taux_{fort} - Taux_i).\Delta NGV_{Taux_{faible}} + (Taux_i - Taux_{faible}).\Delta NGV_{Taux_{fort}}}{(Taux_{fort} - Taux_{faible})}$$

On obtient ainsi un abaque complet pouvant être utilisé pour estimer le colmatage des échangeurs thermiques du même type par la nouvelle méthode (figure 7a).

On comprendra cependant que le présent procédé n'est pas limité à cette façon d'obtenir des abaques, et l'homme du métier saura utiliser une multitude d'approches empiriques, tel que le « machine learning » au sens large (deep learning, réseaux de neurones, etc.).

Pour revenir au procédé d'évaluation du colmatage, le résultat de la comparaison de l'étape (c) permet d'identifier un profil de référence « cible » ΔNGV$_{opt}$ qui est celui le plus proche du profil mesuré (valeur en fonction du temps ΔNGV obtenue à l'issue de l'étape (b)). L'homme du métier connait des outils permettant d'identifier le profil le plus semblable parmi une pluralité de profils par exemple en prenant la différence aux moindres carrés.

Le niveau de colmatage associé au profil de référence « cible » ΔNGV$_{opt}$ constitue alors une estimation fiable du colmatage de passages de la plaque entretoise 10 de l'échangeur thermique considéré, et dans une étape (d) ce niveau de colmatage au profil de référence cible $\Delta NGV_{opt}$ identifié peut être restitué sur une interface 3

*Equipement*

Selon un deuxième aspect est proposé un équipement tel que représenté à la figure 4. Il comprend une unité de traitement 1, une mémoire 2 et une interface 3. L'unité de traitement 1 est connectée au premier capteur de pression 31, au deuxième capteur de pression 32 et au troisième capteur de pression 33, et est configurée pour la mise en œuvre du procédé selon le premier aspect.

Est également proposé un ensemble de cet équipement et de l'échangeur thermique à tubes 11 (i.e. le générateur de vapeur), voir de la centrale nucléaire qui le comprend.

L'invention concerne également un produit programme d'ordinateur comprenant des instructions de code de programme enregistrées sur un support utilisable dans un ordinateur pour l'exécution d'étapes de traitement du procédé d'évaluation du colmatage, lorsque ledit programme est exécuté sur un ordinateur.

De fait, les mesures de pression des capteurs 31, 32, 33 sont transmis à la mémoire 2 pour y être stockées en vue de son traitement. Ce traitement des données de mesure sur lequel porte la présente invention est mis en œuvre par une unité de traitement munie d'un calculateur, typiquement un ordinateur muni d'une interface 3, par lesquels il acquiert le signal de mesure et transmet les résultats de la mise en œuvre du procédé d'évaluation du colmatage, ledit ordinateur étant configuré pour mettre en œuvre le procédé selon l'invention.

**Revendications**

1. Procédé d'évaluation du colmatage de passages d'une plaque entretoise (10) d'un échangeur thermique à tubes (11), lesdits passages (12a, 12b) étant ménagés le long des tubes (11) pour la traversée de la plaque entretoise (10) par un fluide, dans lequel

   - un premier capteur de pression (31) est disposé à une altitude basse de l'échangeur thermique ;
   - un deuxième capteur de pression (32) est disposé à une altitude moyenne de l'échangeur thermique ;
   - un troisième capteur de pression (33) est disposé à une altitude haute de l'échangeur thermique ;

   Le procédé comprenant la mise en œuvre par une unité de traitement de données (1) d'étapes de :

   (a) pendant une phase de fonctionnement transitoire de l'échangeur thermique, détermination d'une valeur en fonction du temps de Niveau de Gamme Large, NGL, à partir des mesures des premier et troisième capteurs de pression (31, 33), et d'une valeur en fonction du temps de Niveau de Gamme Etroite, NGE, à partir des mesures des deuxième et troisième capteurs de pression (31, 33) ;
   (b) détermination d'une valeur en fonction du temps d'écart de Niveau de Gamme Vapeur, $\Delta NGV$, l'écart de Niveau de Gamme Vapeur correspondant au Niveau de Gamme Large dont on a filtré une composante représentative d'une variation de surface libre d'eau dans l'échangeur thermique, à partir des valeurs de NGL et NGE ;
   (c) comparaison de la valeur de $\Delta NGV$ déterminée avec un ensemble de profils de référence $\Delta NGV_i$ pour ladite phase de fonctionnement transitoire de l'échangeur thermique, chaque profil de référence $\Delta NGV_i$ étant associé à un niveau de colmatage, de sorte à identifier un profil de référence cible $\Delta NGV_{opt}$ parmi les profils de référence $\Delta NGV_i$ pour ladite phase de fonctionnement transitoire de l'échangeur thermique, qui est celui le plus proche de la valeur $\Delta NGV$ déterminée.
   (d) restitution sur une interface (3) du niveau de colmatage associé au profil de référence cible $\Delta NGV_{opt}$ identifié.

2. Procédé selon la revendication précédente, dans lequel l'échangeur thermique est un générateur de vapeur présentant une zone de chauffe (20) et une zone de vapeur (25) située à une altitude supérieure à la zone de chauffe (20), les tubes (11) s'étendant seulement dans la zone de chauffe (20).

3. Procédé selon la revendication 2, dans lequel le premier capteur de pression (31) est disposé sensiblement au bas de la zone de chauffe (20), le deuxième capteur (32) est disposé sensiblement en haut de la zone de chauffe (20), et le troisième échangeur (33) est disposé sensiblement en haut de la zone de vapeur (25).

4. Procédé selon l'une des revendications 1 à 3, dans lequel la valeur en fonction du temps de $\Delta NGV$ est déterminée à partir des valeurs de NGL et NGE par la formule $\Delta NGV = NGL - NGE$.

**5.** Procédé selon l'une des revendication 1 à 4, dans lequel le niveau de colmatage est un taux de colmatage exprimé entre 0 et 1.

**6.** Procédé selon l'une des revendication 1 à 5, comprenant une étape préalable (a0) de génération dudit ensemble de profils de référence $\Delta NGV_i$ pendant ladite phase de fonctionnement transitoire de l'échangeur thermique.

**7.** Procédé selon la revendication 6, dans lequel l'étape (a0) comprend la mise en œuvre des étapes (a) et (b) pour un échangeur thermique de référence similaire audit échangeur thermique pendant au moins deux occurrences de ladite phase de fonctionnement transitoire respectivement associées à un premier niveau de colmatage connu et un deuxième niveau de colmatage connu supérieur au premier niveau de colmatage, de sorte à obtenir un premier profil de référence $\Delta \mathbf{NGV}_{Niveau_{faible}}$ pendant ladite phase de fonctionnement transitoire de l'échangeur thermique pour le premier niveau de colmatage et un deuxième profil de référence $\Delta \mathbf{NGV}_{Niveau_{fort}}$ pendant ladite phase de fonctionnement transitoire de l'échangeur thermique pour le premier niveau de colmatage, les autres profils de référence $\Delta NGV_i$ pendant ladite phase de fonctionnement transitoire de l'échangeur thermique étant calculés à partir des premier et deuxième profils $\Delta \mathbf{NGV}_{Niveau_{faible}}$ et $\Delta \mathbf{NGV}_{Niveau_{faible}}$.

**8.** Procédé selon les revendications 5 et 7 en combinaison, dans lequel les autres profils de référence $\Delta NGV_i$ sont calculés à partir des premier et deuxième profils de référence $\Delta \mathbf{NGV}_{Taux_{faible}} = \Delta \mathbf{NGV}_{Niveau_{faible}}$ et $\Delta \mathbf{NGV}_{Taux_{fort}} = \Delta \mathbf{NGV}_{Niveau_{fort}}$ en utilisant la formule

$$\Delta\mathbf{NGV_i} = \frac{(Taux_{fort}-Taux_i).\Delta NGV_{Taux_{faible}}+(Taux_i-Taux_{faible}).\Delta NGV_{Taux_{fort}}}{(Taux_{fort}-Taux_{faible})}.$$

**9.** Procédé selon l'une des revendications 7 et 8, dans lequel, pour chaque niveau de colmatage considéré, l'étape (a0) comprend la mise en œuvre des étapes (a) et (b) pour ledit échangeur thermique de référence similaire audit échangeur thermique pendant au moins trois occurrences de ladite phase de fonctionnement transitoire associées audit niveau de colmatage, de sorte à obtenir au moins trois profils réels $\Delta NGV_r$ pendant ladite phase de fonctionnement transitoire de l'échangeur thermique pour ledit niveau de colmatage, l'obtention du profil de référence $\Delta NGV_i$ pendant ladite phase de fonctionnement transitoire de l'échangeur thermique pour ledit niveau de colmatage comprenant le calcul d'une moyenne des profils réels $\Delta NGV_r$ puis d'une approximation de ladite moyenne par une fonction donnée.

**10.** Procédé selon la revendication 9, dans lequel la moyenne des profils réels $\Delta NGVR_r$ est approximée par un polynôme de degré trois.

**11.** Equipement comprenant une unité de traitement de données (1) connectée à un premier capteur de pression (31), un deuxième capteur de pression (32) et un troisième capteur de pression (33), configuré pour la mise en œuvre du procédé selon l'une des revendications 1 à 10.

**12.** Ensemble d'un équipement selon la revendication 11 et d'un échangeur thermique à tubes (11), dans lequel

- le premier capteur de pression (31) est disposé à une altitude basse de l'échangeur thermique ;
- le deuxième capteur de pression (32) est disposé à une altitude moyenne de l'échangeur thermique ;
- le troisième capteur de pression (33) est disposé à une altitude haute de l'échangeur thermique.

**13.** Produit programme d'ordinateur comprenant des instructions de code de programme pour l'exécution des étapes du procédé selon l'une quelconque des revendications 1 à 10, lorsque ledit programme est exécuté sur un ordinateur.

**Patentansprüche**

**1.** Verfahren zum Bewerten der Verschmutzung von Durchgängen einer Distanzplatte (10) eines Rohrwärmetauschers (11), wobei die Durchgänge (12a, 12b) entlang der Rohre (11) angebracht sind, für den Durchgang einer Flüssigkeit durch die Distanzplatte (10), wobei

- ein erster Drucksensor (31) in einer geringen Höhe des Wärmetauschers angeordnet ist;
- ein zweiter Drucksensor (32) in einer mittleren Höhe des Wärmetauschers angeordnet ist;

- ein dritter Drucksensor (33) in einer großen Höhe des Wärmetauschers angeordnet ist.

Das Verfahren umfasst die Umsetzung der folgenden Schritte durch eine Datenverarbeitungseinheit (1), mit den Etappen:

(a) während einer Übergangsphase des Wärmetauscherbetriebs; Bestimmen eines zeitabhängigen Wertes des breiten Niveaubereichs, NGL, aus den Messungen des ersten und dritten Drucksensors (31, 33), und eines zeitabhängigen Wertes des schmalen Niveaubereichs, NGE, aus den Messungen des zweiten und dritten Drucksensors (31, 33);

(b) Bestimmen eines zeitabhängigen Wertes der Abweichung des Dampfbereichpegels, ΔNGV, die Abweichung des Dampfbereichpegels entspricht dem breiten Niveaubereich, aus dem eine für eine Schwankung der freien Wasseroberfläche im Wärmetauscher repräsentative Komponente gefiltert wurde, von den Werten des NGL und NGE ausgehend;

(c) Vergleich des ermittelten ΔNGV-Wertes mit einer Gesamtheit von $\Delta NGV_i$-Referenzprofilen für die Übergangsphase des Wärmetauscherbetriebs, wobei jedes $\Delta NGV_i$-Referenzprofil einem Verschmutzungsgrad zugeordnet ist, um ein Soll-Referenzprofil $\Delta NGV_{opt}$ unter den $\Delta NGV_i$-Referenzprofilen für die Übergangsphase des Wärmetauscherbetriebs zu identifizieren, die dem bestimmten ΔNGV-Wert am nächsten kommt;

(d) Angabe des Verschmutzungsgrades auf einer Schnittstelle (3), der das identifizierten Soll-Referenzprofil $\Delta NGV_{opt}$ zugeordnet ist.

2. Verfahren nach dem vorhergehenden Anspruch, wobei der Wärmetauscher ein Dampferzeuger ist, der eine Heizzone (20) und eine Dampfzone (25) aufweist, die höher als die Heizzone (20) angeordnet ist, wobei sich die Rohre (11) nur in der Heizzone (20) erstrecken.

3. Verfahren nach Anspruch 2, wobei der erste Drucksensor (31) im Wesentlichen unten in der Heizzone (20) angeordnet ist, der zweite Sensor (32) im Wesentlichen oben in der Heizzone (20) angeordnet ist, und der dritte Tauscher (33) im Wesentlichen oben in der Dampfzone (25) angeordnet ist.

4. Verfahren nach einem der Ansprüche 1 bis 3, wobei der zeitabhängige Wert von ΔNGV aus den Werten von NGL und NGE nach der Formel ΔNGV=NGL-NGE festgelegt wird.

5. Verfahren nach einem der Ansprüche 1 bis 4, wobei der Verschmutzungsgrad ein Wert der Verschmutzung ist, der zwischen 0 und 1 ausgedrückt wird.

6. Verfahren nach einem der Ansprüche 1 bis 5, umfassend eine vorangehende Etappe (a0) des Generierens der Gesamtheit von $\Delta NGV_i$-Referenzprofilen während der Übergangsphase des Wärmetauscherbetriebs.

7. Verfahren nach Anspruch 6, wobei die Etappe (a0) die Umsetzung der Etappen (a) und (b) für einen Referenzwärmetauscher umfasst, der dem Wärmetauscher während der Übergangsphase in mindestens zwei Fällen ähnelt, die jeweils einem ersten bekannten Verschmutzungsgrad und einem zweiten bekannten Verschmutzungsgrad zugeordnet sind, der höher als der erste Verschmutzungsgrad ist, um ein erstes Referenzprofil $\Delta NGV_{Niveaufaible}$ während der Übergangsphase des Wärmetauscherbetriebs für den ersten Verschmutzungsgrad zu erhalten und ein zweites Referenzprofil $\Delta NGV_{Niveaufort}$ während der Übergangsphase des Wärmetauscherbetriebs für den ersten Verschmutzungsgrad zu erhalten, wobei die anderen $\Delta NGV_i$-Referenzprofile während der Übergangsphase des Wärmetauscherbetriebs aus dem ersten und zweiten Profil, $\Delta NGV_{Niveaufaible}$ und $\Delta NGV_{Niveaufaible}$, berechnet werden.

8. Verfahren nach den Ansprüchen 5 und 7 in Kombination, wobei die anderen $\Delta NGV_i$-Referenzprofile aus den ersten und zweiten Referenzprofilen berechnet werden, $\Delta NGV_{Tauxfaible} = \Delta NGV_{Niveaufaible}$ und $\Delta NGV_{Tauxfort} = \Delta NGV_{Niveaufort}$,

unter Verwendung der Formel
$$\Delta NGV_i = \frac{(Taux_{fort} - Taux_i).\Delta NGV_{Taux_{faible}} + (Taux_i - Taux_{faible}).\Delta NGV_{Taux_{fort}}}{(Taux_{fort} - Taux_{faible})}$$
.

9. Verfahren nach einem der Ansprüche 7 und 8, wobei die Etappe (a0) für jeden betrachteten Verschmutzungsgrad die Umsetzung der Etappen (a) und (b) für einen Referenzwärmetauscher umfasst, der dem Wärmetauscher während der Übergangsphase in mindestens drei Fällen ähnelt, die mit dem Verschmutzungsgrad verbunden sind, um mindestens drei reale $\Delta NGV_r$-Profile für den Verschmutzungsgrad während der Übergangsphase des Wärmetauscherbetriebs zu erhalten; das Erhalten des $\Delta NGV_i$-Referenzprofils für den Verschmutzungsgrad während der Übergangsphase des Wärmetauscherbetriebs umfasst die Berechnung eines Durchschnitts der realen $\Delta NGV_r$-Profile und dann eine Annäherung des Durchschnitts durch eine gegebene Funktion.

**10.** Verfahren nach Anspruch 9, wobei der Durchschnitt der realen $\Delta NGV_r$-Profile durch ein Polynom dritten Grades angenähert wird.

**11.** Ausrüstung, umfassend eine Datenverarbeitungseinheit (1), die mit einem ersten Drucksensor (31), einem zweiten Drucksensor (32) und einem dritten Drucksensor (33) verbunden ist, konfiguriert zur Umsetzung des Verfahrens nach einem der Ansprüche 1 bis 10.

**12.** Gesamtheit einer Ausrüstung nach Anspruch 11 und ein Rohrwärmetauscher (11), wobei

- der erste Drucksensor (31) in einer geringen Höhe des Wärmetauschers angeordnet ist;
- der zweite Drucksensor (32) in einer mittleren Höhe des Wärmetauschers angeordnet ist;
- der dritte Drucksensor (33) in einer großen Höhe des Wärmetauschers angeordnet ist.

**13.** Computerprogrammprodukt, umfassend Programmcodeanweisungen zur Ausführung der Etappen des Verfahrens nach einem der Ansprüche 1 bis 10, wenn das Programm auf einem Computer ausgeführt wird.

**Claims**

**1.** A method for the evaluation of fouling of passages of a spacer plate (10) of a tubular heat exchanger (11), said passages (12a, 12b) being arranged along the tubes (11) for fluid to pass through the spacer plate (10), wherein

- a first pressure sensor (31) is arranged at a low altitude of the heat exchanger;
- a second pressure sensor (32) is arranged at a medium altitude of the heat exchanger;
- a third pressure sensor (33) is arranged at a high altitude of the heat exchanger;

The method comprising performing by a data-processing unit (1) steps of:

(a) during a transient operation phase of the heat exchanger, determination of a value over time of Wide Range Level, NGL, from the measurements of the first and third pressure sensors (31, 33), and of a value over time of Narrow Range Level, NGE, from the measurements of the second and third pressure sensors (31, 33);
(b) determination of a value over time of Steam Range Level deviation $\Delta NGV$, the Steam Range Level deviation corresponding to the Wide Range Level from which a component representative of a variation in free water surface in the heat exchanger has been filtered, from the values of NGL and NGE;
(c) comparison of the determined value of $\Delta NGV$ with a set of reference profiles $\Delta NGV_i$ for said transient operation phase of the heat exchanger, each reference profile $\Delta NGV_i$ being associated with a level of fouling, so as to identify a target reference profile $\Delta NGV_{opt}$ among the reference profiles $\Delta NGV_i$ for said transient operation phase of the heat exchanger, which is that closest to the determined value of $\Delta NGV$.
(d) outputting on an interface (3) of the level of fouling associated with the identified target reference profile $\Delta NGV_{opt}$.

**2.** The method according to the preceding claim, wherein the heat exchanger is a steam generator having a heat zone (20) and a steam zone (25) located at an altitude greater than the heat zone (20), the tubes (11) extending in the heat zone (20) only.

**3.** The method according to claim 2, wherein the first pressure sensor (31) is arranged substantially at the bottom of the heat zone (20), the second sensor (32) is arranged substantially at the top of the heat zone (20), and the third exchanger (33) is arranged substantially at the top of the steam zone (25).

**4.** The method according to one of claims 1 to 3, wherein the value over time of $\Delta NGV$ is determined from the values of NGL and NGE by the formula $\Delta NGV = NGL - NGE$.

**5.** The method according to one of claims 1 to 4, wherein the level of fouling is a rate of fouling expressed between 0 and 1.

6. The method according to one of claims 1 to 5, comprising a previous step (a0) for the generation of said set of reference profiles $\Delta NGV_i$ during said transient operation phase of the heat exchanger.

7. The method according to claim 6, wherein step (a0) comprises performing steps (a) and (b) for a reference heat exchanger similar to said heat exchanger during at least two occurrences of said transient operation phase respectively associated with a first level of known fouling and a second level of known fouling greater than the first level of fouling so as to obtain a first reference profile $\Delta NGV_{Level_{low}}$ during said transient operation phase of the heat exchanger for the first level of fouling and a second reference profile $\Delta NGV_{Level_{high}}$ during said transient operation phase of the heat exchanger for the first level of fouling, the other reference profiles $\Delta NGV_i$ during said transient operation phase of the heat exchanger being calculated from the first and second profiles $\Delta NGV_{Level_{low}}$ and $\Delta NGV_{Level_{low}}$.

8. The method according to claims 5 and 7 in combination, wherein the other reference profiles $\Delta NGV_i$ are calculated from the first and second reference profiles $\Delta NGV_{Rate_{low}} = \Delta NGV_{Level_{low}}$ and $\Delta NGV_{Rate_{high}} = \Delta NGV_{Level_{high}}$ by using the formula

$$\Delta NGV_i = \frac{(Rate_{high}-Rate_i).\Delta NGV_{Rate_{low}}+(Rate_i-Rate_{low}).\Delta NGV_{Rate_{high}}}{(Rate_{high}-Rate_{low})}.$$

9. The method according to one of claims 7 and 8, wherein, for each level of fouling considered, the step (a0) comprises performing the steps (a) and (b) for said reference heat exchanger similar to said heat exchanger during at least three occurrences of said transient operation phase associated with said level of fouling so as to obtain at least three real profiles $\Delta NGV_r$ during said transient operation phase of the heat exchanger for said level of fouling, the obtaining of the reference profile $\Delta NGV_i$ during said transient operation phase of the heat exchanger for said level of fouling comprising calculating an average of the real profiles $\Delta NGV_r$ then the approximation of said average by a given function.

10. The method according to claim 9, wherein the average of the real profiles $\Delta NGV_r$ is approximated by a three-degree polynomial.

11. Equipment comprising a data-processing unit (1) connected to a first pressure sensor (31), a second pressure sensor (32) and a third pressure sensor (33), configured for executing the method according to one of claims 1 to 10.

12. All of the equipment according to claim 11 and of a tubular heat exchanger (11), wherein

    - the first pressure sensor (31) is arranged at a low altitude of the heat exchanger;
    - the second pressure sensor (32) is arranged at a medium altitude of the heat exchanger;
    - the third pressure sensor (33) is arranged at a high altitude of the heat exchanger.

13. A computer program product comprising program code instructions for performing the steps of the method according to any one of claims 1 to 10, when said program is run on a computer.

FIG 1a

**FIG 1b**

**FIG 2**

33

23

$P_{vap}$

Niveau Gamme Etroite
(NGE)

32

21

25

Niveau Gamme Large
(NGL)

22

20

$P_{bas}$

31

15

14

**FIG 3**

FIG 4

**FIG 5**

FIG 6a

FIG 6b

Abaque empirique CA4 GV2

FIG 7a

Approximation polynômiale des signaux ΔNGV réels

**FIG 7b**

Calcul des signaux ΔNGV théoriques à faible et fort taux de colmatage

FIG 7c

**EP 3 724 591 B1**

## RÉFÉRENCES CITÉES DANS LA DESCRIPTION

**Documents brevets cités dans la description**

- EP 3087444 A

**Littérature non-brevet citée dans la description**

- **S. GIRARD.** Diagnostic du colmatage des générateurs de vapeur à l'aide de modèles physiques et statistiques. *hèse de l'Ecole Nationale Supérieure des Mines de Paris,* Décembre 2012